# EUROPEAN PATENT SPECIFICATION

(11) **EP 1 482 707 B1**
(45) Date of publication and mention of the grant of the patent: **23.04.2008**
(21) Application number: 04013593.1
(22) Date of filing: 02.03.2000
(51) Int. Cl.: H04L 29/06, H04L 12/22

(54) **An internet interface system**
Internet-Schnittstellensystem
Système d'interface pour Internet

(30) Priority: 02.03.1999 GB 9904791
(43) Date of publication of application: 01.12.2004
(62) Divisional of application: 00907768.6
(73) Proprietor: America Online, Inc., Dulles, VA 20166 (US)
(72) Inventor: Hunt, John, Dulles, VA 20166 (US); Gladstone, Ben, Dulles, VA 20166 (US); Morris, Kief, Dulles, VA 20166 (US); Kalaher, Patrick, Dulles, VA 20166 (US); Byrn, Mark, Dulles, VA 20166 (US); Moilanen, Esa, Dulles, VA 20166 (US); Lidwell, Peter, Dulles, VA 20166 (US)
(74) Representative: Finnie, Peter John

(56) References cited:
- EP-A- 0 855 659
- WO-A-98/58491
- US-A- 6 038 601
- GABBER E ET AL: "HOW TO MAKE PERSONALIZED WEB BROWSING SIMPLE, SECURE, AND ANONYMOUS" FINANCIAL CRYPTOGRAPHY. INTERNATIONAL CONFERENCE, XX, XX, 1997, pages 17-31, XP001011338

## Description

### Field of the Invention

The present invention relates to the registration of internet users at websites.

### Background to the Invention

Before using many websites, intemet users need to fill in an often cumbersome registration form providing personal data. Site owners require this information for marketing purposes and to personalise the offering to customers. Registration demands can range from the basic requirement of a name and email address to a detailed request for personal information including street address, employment details and even salary levels. This process gives rise to a number of problems for users. Registration is often slow and not intuitive, with an additional problem that formats differ from site to site. Once registered with more than one site, users also have the problem of keeping track of the different user names and passwords that they use. When a user's information changes (email, addresses etc.) the management of multiple registrations becomes unwieldy. Furthermore, users have little or no control of information released to sites which can on-sell the personal data leading to both a breach of individual privacy and, perhaps inevitably, an accompanying barrage of unwanted direct marketing emails or "spam".

EP-A-0855659 discloses a central proxy system which is able to generate substitute user names and file specific substitute passwords for accessing remote websites. The system allows users to register at remote websites anonymously. Anonymity is preserved by substituting user identifiers with substitute data generated from user input data.

A typical intemet user may be registered with between four and ten sites and would probably register with one new site each month. The greater these numbers the more serious the problem becomes. New users and sites are coming to the intemet at exponential rates of growth so this problem can only get worse.

Though necessary for their business model, registration also poses a major problem to site owners. Users quite often enter bogus information (often several times having forgotten their password and thus having to register anew), which is of no use to site owners whilst bearing a data storage cost. Bogus information is entered for a number of reasons: frustration with the speed of the registration process, a general mistrust of the security and subsequent use of the data, or simply because the user has forgotten the previous registration details. Indeed, as much as 50% of all consumer data held by major sites on the intemet is estimated to be false. Even genuine registration data becomes inaccurate over time if it is not up-dated.

Another problem is that users frustrated with the registration process will stop before completion so that the site loses a new potential customer. It is estimated that over 50% of potential users are lost due to aborted registrations.

### Summary of the Invention

According to the present invention there is provided a method for protecting privacy of a user registering from a client node of a communications network at a server node connected to the communication network by the use of at least one registration agent server node connected to the communications network which stores personal data associated with the user together with registration data associated with the server node, the method comprising the steps of:
storing said personal data in the form a master user profile data structure ; and,
providing a unique proxy address for the user in a registration application, so that communications addressed to the user using the unique proxy address are received by the at least one registration agent server, the method being characterised by the steps of:
   accepting user inputs which define a privacy policy in relation to the user's personal data which describes the policies the user requires the server node to have if the user's personal data is to be given to the server node by the registration agent server node, and the extent to which the personal data is to be released for the purpose of submitting a registration application; and,
   storing said inputs defining said privacy policy in the master user profile data structure,
wherein said unique proxy address is provided so that communications addressed to the user using the unique proxy address are subsequently forwarded to the user.

In one example, the present invention provides a registration agent site which presents a simple intermediary between sites and internet users that acts as a single source of data entry, user name and password for users. This allows users to register with new sites automatically and move between registered sites via a single interface, whilst allowing changes in profile information via the same interface. The registration agent site acts as the agent for the internet user rather than the site owner, allowing registration by proxy in a manner which is transparent to other sites. The agent negotiates connectivity and connects the user.

In terms of the internet user, the benefits of using the interface provided by the registration agent site can be summarised as follows: the interface provides a convenient way of navigating between sites since it is necessary to remember only one password; the interface provides an effortless way of registering with new sites; it offers the ability to effect a global change across sites; it provides for the control of privacy by allowing the user to define a privacy policy; and, it allows for the integration of email filtering by proxy to prevent "spamming".

The registration agent site provides a central repository of all personal information that an individual internet user is, at least to some extent, prepared to give out to sites in order to register with the site. Personal details particular to each site registration are stored as well as a master profile of all personal information. This information can be recalled and modified via the interface. Accordingly, the user of the interface will know what personal information has been given out and to whom as well as the totality of information given out to all sites. Users are able to impose specific controls on how their personal information is used to register with a site including the complete prohibition of the use of certain information, provided this does not conflict with a site's registration requirements. If there is a conflict, the interface allows this to be resolved by deferring to the user for a final decision.

In summary, the service that the interface of the registration agent site provides is one of assisting intemet users to complete registration forms for websites by proxy, and logging into their sites on repeat visits. The user does not have to retype information, can have different profiles, can automatically check privacy policies, can review what data has been given out and to whom, and can protect their email address. Indeed, a key component of helping users control their interaction with sites is to protect their email address from being abused by the sites they give it to. The present invention offers the option to give protected email addresses to sites when a user registers through the interface. The site does not receive the users real address, but is instead given a unique proxy address (a different one for each site). Email sent to that address is forwarded to the users email account. This allows users to selectively cut "spammers" off without having to change their email address. It also allows users to identify which sites are giving their email addresses to third parties which use it for "spam".

### Brief Description of the Drawings

An example of the present invention will now be described in detail with reference to the accompanying drawings, in which:
Figure 1 is a simplified schematic diagram showing an intemet user's computer connected to the World Wide Web;
Figure 2 is a simplified block diagram of an example of a registration agent website server;
Figures 3 and 4 show an example of an internet user registering with a website; and,
Figures 5 and 6 show an example of an internet user transferring registration information for a number of websites to a registration agent website.

### Detailed Description

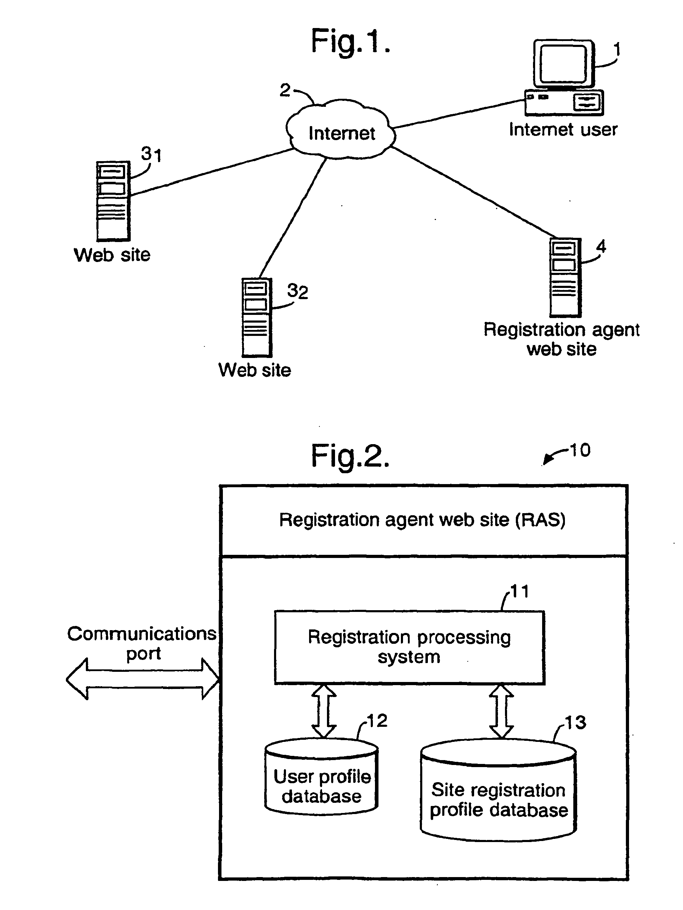

Figure 1 is a simplified schematic diagram showing an internet user's computer 1 connected to the World Wide Web 2. The internet user's computer 1 uses web browsers to navigate the World Wide Web to access desired services, known as websites 3. Many websites require an intemet user to register at the website, wherein the user is required to establish a user identification and optionally a password for the website. Typically, the user is also asked to provide other personal information, not all of which is mandatory. The present invention provides a registration agent site (RAS) 4, in this example a web server, which presents a simple intermediary between sites and intemet users that acts as a single source of data entry, user name and password for users. The invention allows users to register with new sites automatically and move between registered sites via a single interface, whilst allowing changes in profile information via the same interface. The interface acts as the agent for the internet user rather than the site owner, allowing registration by proxy.

Figure 2 is a simplified block diagram of an example of a registration agent site 10. The web server includes a registration processing system 11 which controls the steps of lodging a registration with websites on behalf of internet users who are registered members of the registration agent site. The server stores user profiles in a user database 12 which represent a master profile of all personal information, including a privacy policy, and personal details particular to each website where the user has registered to date. Each website that is affiliated with the registration agent site is represented in a registration profile database 13 where details of the site registration requirements, including the registration forms used by the website, are stored.

The core service provided by the registration agent site 10 is one of assisting users to fill out forms on websites, primarily targeted towards registering with new sites and logging into sites on repeat visits. The user does not have to retype information, can have different profiles, can automatically check privacy policies, can review what data they gave out and to whom, and can protect their email address. The system does not require any plug-ins or software downloads, and is browser independent.

The registration processing system 11 is responsible for submitting user data to a site's registration system. This involves the following functionality:
1. analysing the site's data requirements and forms handling system (in other words, what data do they want from the user and how does their registration system work?);
2. determining the site's data privacy policies;
3. marshalling the appropriate user data;
4. identifying and resolving conflicts between the users privacy preferences and the site's policies;
5. providing the data to the sites; and,
6. storing information about the transaction.

The functionality and data requirements can be divided into three sections: interfacing with target sites, managing and using data, and interfacing with the users.

When a user wants to fill but a form on a site, the registration agent site 10 must marshal the appropriate user data and provide it to the target site. This implies two core parts of the interface: determining what data the site needs and supplying the data to the site.

A simple way to supply data to sites is to submit it directly to the site's own forms processing applications in the format it expects it. This involves making an HTTP GET or POST request to the uniform resource indicator (URI) to which the site's own HTML forms submit their data. Alternatives include using JavaScript to fill the site's form or proxying form submission. In the latter, the registration processing system acts as an HTTP client, connects to the target site's webserver and submits the form. Moreover, preferably, the registration processing system 11 uses a process which emulates the normal registration by a user by providing a form which duplicates the data submission of the site's own form. The registration processing system 11 generates an HTML page which is dynamic and which contains a form with all of the relevant data fields of the site's own form. The target for this form submission is the same URI which the site's form submits to.

Any system for submitting data to a site on behalf of a user will need certain information about the site and its form system, which is termed Site Data Requirements (SDR). A given site's SDR is stored in the registration profile database 13, and needs to include at least some of the following information:
1. what forms are on the site?
2. what are the site's data privacy policies? Is there any relevant third party auditing or accreditation?
3. for each form, what URI is the form submitted to?
4. for each form, what data fields are needed?
5. for each data field, is the data contained in the user profile, and if so, which field of the profile?
6. for each data field, if the data is not contained in the user file, what description should be shown to the user to explain what is needed?
7. for each data field, what values are acceptable as input? This includes whether the field is required or optional;
8. for each data field, what name is it given by the site's forms processing system? and,
9. for each data field, is the user's data going to be unique to this site, for example user name and password, as opposed to something which can be the same on all sites, such as postal code?

SDRs can be determined in a number of ways. In one example, an individual must first analyse the sites to determine the requirements and enter the information into the registration profile database 13. It would then be possible to update the stored data to take account of any changes which subsequently occur. This update may be implemented automatically. In another example, it may be possible to interrogate the site automatically in an intelligent fashion to determine the SDR. Affiliated sites may also cooperate by embedding encoded information into their HTML forms to allow the SDRs to be determined automatically by the registration processing system.

The user profile database 12 stores a collection of data for each user. A user is able to view all data maintained about them as an individual and normally no one else has access to this without the express permission of the user.

The user profile file structure includes personal preferences data which is used as part of the interaction with the registration agent site and includes the user name and password, as well as information for customisation of the user interface. This information is not available to sites.

The user profile file structure also includes privacy preferences data which describe the policies the user would like a site to have if their data is to be given to the site by the registration agent site. This covers general policies for the site, whether or not the site's policies are certified, and also links policy choices to individual fields of the user personal data (described below). This linking allows users to specify that some data is more sensitive than others, so a site which only asks for low sensitivity data is not expected to have as rigorous a data privacy policy as a site which wants more sensitive data.

As mentioned above, the user profile file structure also includes personal data which is available to sites the user chooses to register with (although the data is still subject to the privacy settings described above). The registration agent site 10 stores a core profile which is a set of data fields required by more than one site. Users can have more than one set of core profile data which allows them to maintain a set of different "personalities", for example one for a work address and one for a home address.

Other personal data can be stored in site-specific user profiles forming part of the user profile file structure. These may consist of data which the user has supplied to a particular site, but which is not used for other sites. Examples include a user name and password for a site, or preference data specific to one site.

The registration processing system 11 also allows users the option to give "protected" email addresses to sites rather than their normal address. When a site requests the user's email address, the interface generates a new address in a mail domain and supplies that to the site. Email to the address is forwarded by the registration agent's system to the user's real email address, including a header indicating which site it originated from. Mail is not stored by the system, merely forwarded. The user can disable a protected address to prevent unwanted mail from reaching them.

The web server which supports the registration processing system and associated databases includes a server platform with appropriate hardware and an operating system, mail serving software, and a hosting service. The databases may be provided on the same machine or from a remote source which is networked to the web server.

A user can be introduced to the registration agent site 10 by navigating directly to the associated URI, from an affiliated site where they are registering for the first time (they are presented with a registration button which provides a link to the registration agent site), or from an affiliated site where they are already registered (where again they are presented with a registration button). In the latter case, the user is prompted by the registration agent site 10 to provide their existing user name and password for the site either before or after registering with the registration agent.

When registering for the first time with the registration agent site 10, the user is presented with a form generated dynamically to gather the minimum information they need, given the circumstances. Core information required to sign up a new member includes the user's email address (which is subsequently verified). The new member chooses a usemame and password which is required on all subsequent visits to the registration agent site. If the new member is registering with a new site at this time, the user is presented with a form which sets out the information that the site will want for registration. The user is also presented with the option of filling out data fields required by most affiliated sites which will make signing up with new sites faster next time.

The information may be grouped into different categories, for example:
1. basic information (name, email address);
2. professional contact information (work address and phone number, etc);
3. personal contact information (home address, etc);
4. profession demographics (job title, etc); and,
5. personal demographics (size of family, hobbies, interests, dislikes, etc).

For each information group, the user chooses an information policy, which tells the registration agent site 10 when and to whom the information in that category can be given out. In this example, the choices are colour coded similar to traffic light colours. Green data is data that can be given out to any site the user wishes to register with. Yellow data can be given to a site which matches certain criteria the user sets. Red data will not be given out at all by the registration agent site, unless the user specifically agrees to it at the time the data is requested. The user can choose the circumstances under which the data they tag as yellow can be given to sites they register with. For example, the user may specify that the site must have certain data handling policies in place and perhaps that these policies must be verified by an independent agency.

As described above, there are a number of ways that an intemet user can become a member of the registration agent site 10 and some examples of these will be described below. Throughout, the registration agent site and the interface it provides shall be referred to as "RAS".

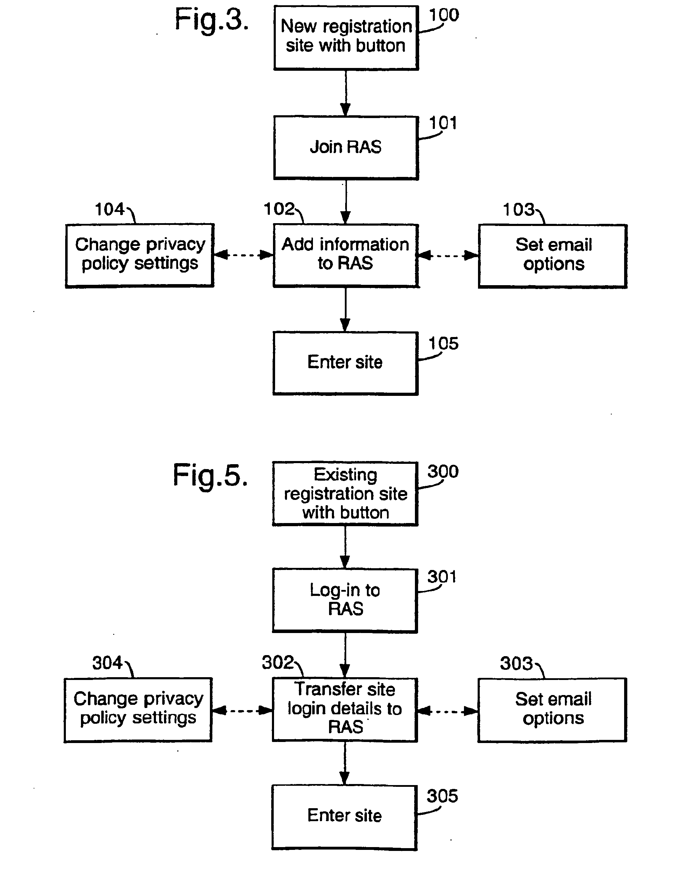

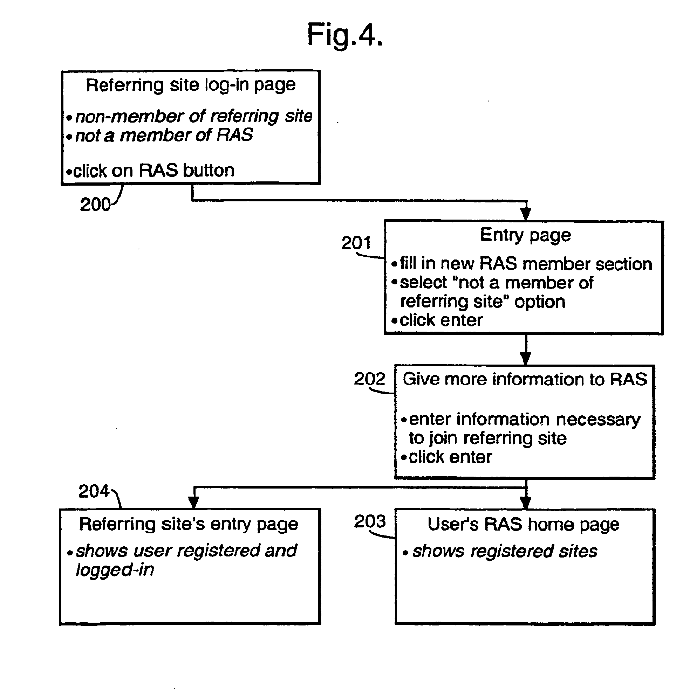

In Figures 3 and 4, it is assumed that the intemet user has navigated the World Wide Web using a web browser (step 100 or 200) to arrive at the login page of a website (referring site), of which they are not already a member, but which is affiliated with the RAS and provides a button or other icon with a URI to the RAS web server. The user is not already a member of the RAS. The user clicks on the RAS button appearing on the login page and a pop-up window appears and the browser window of the referring site goes behind. In step 101 or 201 the user completes the new member section of an entry page, giving a username, password, email address and language.

The user then selects an option that says that they are not already a member of the referring site and clicks on an "enter" button. A new page then appears in step 102 or 202 requesting additional information that is necessary for the user to actually register with the referring site. The site requirements are determined by accessing the registration profile database 13. A master user profile for the new member is created and stored in the user profile database 12, together with a personal profile for the new registration. Once the user has provided the additional information, they click "enter' and the user's new home page for the RAS appears (in step 203) showing the referring site as a registered site and a separate list suggesting other affiliated sites where the user may wish to register. The RAS pop-up window is then hidden behind the referring site window, which itself changes to the page showing that the user has successfully registered with the site.

In future, it is possible to logon to the same website by navigating directly to the RAS website (by typing the address for the registration agent site, assigning a bookmark or clicking on an advertisement banner), and then clicking on the listed entry for the site on the user's home page. Alternatively, the user can navigate directly to the website itself, click on the RAS button, and logon via the RAS website.

In each of the above cases, whether the procedure be a simple logon or a new registration, it is preferred that the process is entirely transparent to the website of interest in the sense that it is wholly unaware of the involvement of an intermediary.

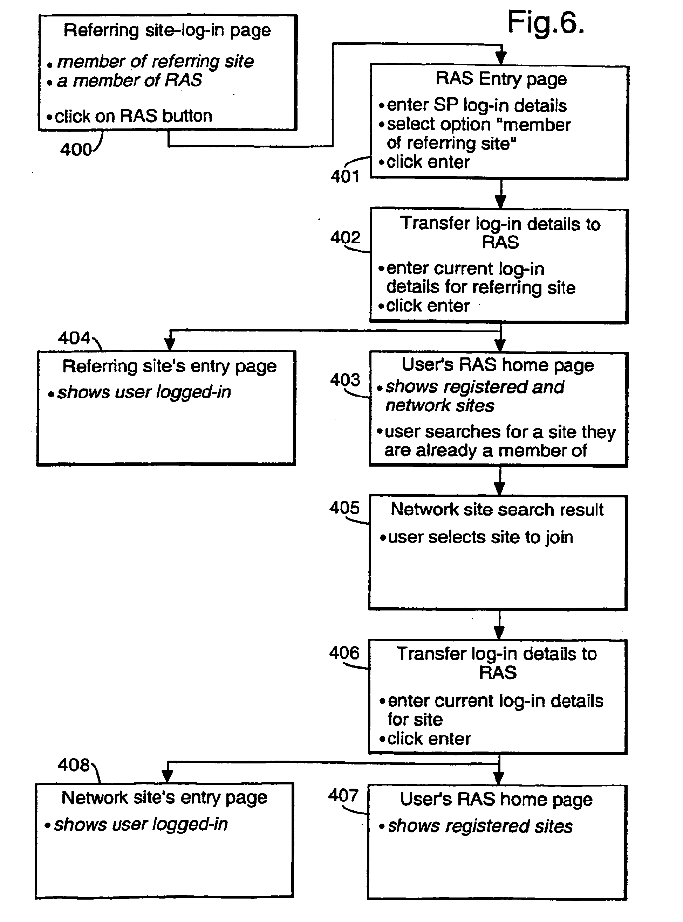

In Figures 5 and 6, the internet user is already a member of both the RAS and a particular website (referring site). Again, the user is assumed to have navigated (in step 300 or 400) to the logon page of the referring site using their web browser, but is seeking a more convenient way to sign in to the website. In step 301 or 401 the user clicks on the RAS button and a RAS pop-up window appears over the browser window of the referring site. The user enters their usemame and password for the RAS and selects the option that says that they are already a member of the referring site. The user then clicks "enter" and a new page appears with a request for the user's current login details for the referred site. In step 302 or 402 the user enters their current login details for the referring site and then clicks the "enter" button. The user's RAS home page then appears showing the referring site as a registered site (in step 403). A personal profile for this site is created and stored in the user's profile database 12 for future use.

In the example shown in Figure 6, the internet user decides to repeat the process in steps 405 and 406 for other sites which they are members of (but have registered with the sites independently of the RAS). The user switches back to the RAS window and on the home page enters the site name into a search box. The search results are displayed to the user in step 405 who then selects the appropriate site and the transfer of login details process is repeated as above in step 406.

An important aspect of the present invention is that it is possible for the user to specify a privacy policy (indicated in steps 103 and 104) which may restrict to some extent information the user is prepared to provide to sites in order to complete the site's registration forms. From knowledge of the registration requirements of each affiliated site (stored in the registration profile database), it is possible for the registration agent site 10 to determine whether or not a particular item of personal information is mandatory and subsequently wam a user that there is a policy clash before an attempt to register with the site is made. A user can be given the option of making an exception in the circumstances or amending their global policy for the item of data in question.

In summary, the present invention provides a central repository of all personal information that an individual internet user is, at least to some extent, prepared to give out to sites in order to register with the site. Personal details particular to each site registration are stored as well as a master profile of all personal information. This information can be recalled and modified via the interface. Accordingly, the user of the interface will know what personal information has been given out and to whom as well as the totality of information given out to all sites. Users are able to impose specific controls on how their personal information is used to register with a site including the complete prohibition of the use of certain information, provided this does not conflict with a site's registration requirements. If there is a conflict, the interface allows this to be resolved by deferring to the user for a final decision.

## Claims

1. A method for protecting privacy of a user registering from a client node (1) of a communications network (2) at a server node (3) connected to the communication network by the use of at least one registration agent server node (4) connected to the communications network which stores personal data associated with the user together with registration data associated with the server node, the method comprising the steps of:
storing said personal data in the form a master user profile data structure (12); and,
providing a unique proxy address for the user in a registration application, so that communications addressed to the user using the unique proxy address are received by the at least one registration agent server the method being **characterised by** the steps of:
accepting user inputs which define a privacy policy in relation to the user's personal data which describes the policies the user requires the server node to have if the user's personal data is to be given to the server node by the registration agent server node, and the extent to which the personal data is to be released for the purpose of submitting a registration application; and,
storing said inputs defining said privacy policy in the master user profile data structure (12),
wherein said unique proxy address is provided so that communications addressed to the user using the unique proxy address are subsequently forwarded to the user.

2. A method according to claim 1, wherein a different proxy address for the user is allocated for each subsequent registration with other service computers or server nodes.

3. A method according to any preceding claim, wherein communications are forwarded to the user in dependence on an email filtering policy accepted by the user.

4. A method according to any preceding claim, the method further comprising the steps of:
in response to a request from the user to a registration agent server node (4) connected to the communications network (2) to register the user with the server node (3), submitting a registration application to register the user with the server node by transmitting registration information from the registration agent server node according to said privacy policy, wherein the registration information is compiled from data obtained by accessing the user's personal data and by accessing registration data for the server node stored at said registration agent server node.

5. A method according to claim 4, wherein said transmitted information is compiled by selectively accessing the user's personal data according to the privacy policy.

6. A method according to any preceding claim, wherein the server node (3) is a website having a server connected to the Internet or an intranet.

7. A method according to any preceding claim, wherein the at least one registration agent server node (4) is connected to the Internet, an intranet, or an IP network.

8. A method according to any preceding claim, wherein the at least one registration agent server node (4) operates a world wide web site.

9. A method according to any preceding claim, further including the step of:
storing a number of personal registration data structures, each of which describes registration data associated with the successful registration of the user with a server node (3).

10. An apparatus for protecting privacy of a user comprising:
means (13) for storing registration data;
means (12) for storing personal data;
means (11) for receiving a user request to submit a registration application on behalf of the user to a remote site;
means (11) for completing a registration application using a combination of personal data associated with the user and registration data associated with the remote site;
means (11) for transmitting a completed registration application to the remote site on behalf of the user; and
at least one computer readable storage medium containing computer-executable instructions for performing the method of any one of claims 1 to 9.

11. An apparatus according to claim 10, further comprising at least one of a server node (3) and a registration agent server node (4).

12. An apparatus according to claim 11, wherein the server node (3) and the registration agent server node (4) are arranged to provide a website having a unique universal resource locator.

13. An apparatus according to any one of claims 10 to 12, wherein the apparatus is a computer system,
wherein the means (13) for storing registration data is a memory adapted to store registration data associated with one or more remote computer systems;
the means (12) for storing personal data is a memory adapted to store personal data associated with one or more users; and
the means for receiving a user request, the means for completing a registration application and the means for transmitting a completed application is a processor (11), the processor configured to accept a user request to:
submit a registration application on behalf of the user to a remote computer system;
to complete a registration application using a combination of personal data associated with the user and registration data associated with the remote computer system, said personal data selected according to said privacy policay; and
to submit the completed registration application to the remote site on behalf of the user.

## Patentansprüche

1. Verfahren zum Datenschutz eines Benutzers, der sich von einem Client-Knoten (1) eines Kommunikationsnetzes (2) bei einem Server-Knoten (3), der mit dem Kommunikationsnetz verbunden ist, registriert, durch die Verwendung mindestens eines mit dem Kommunikationsnetz verbundenen Registrierungsagent-Serverknotens (4), der persönliche Daten, die dem Benutzer zugeordnet sind, zusammen mit Registrierungsdaten, die dem Serverknoten zugeordnet sind, speichert, wobei das Verfahren die folgenden Schritte umfasst:
Speichern der persönlichen Daten in der Form einer Benutzerprofil-Stammdatenstruktur (12); und
Bereitstellen einer eindeutigen Proxy-Adresse für den Benutzer in einem Registrierungsantrag, damit unter Verwendung der eindeutigen Proxy-Adresse an den Benutzer adressierte Nachrichten von dem mindestens einen Registrierungsagent-Server empfangen werden,
**gekennzeichnet durch** die Schritte:
Akzeptieren von Benutzereingaben, die eine Datenschutzregelung bezüglich der persönlichen Daten des Benutzers definieren, welche die Grundsätze beschreibt, deren Einhaltung der Benutzer von dem Serverknoten fordert, wenn die persönlichen Daten des Benutzers **durch** den Registrierungsagent-Serverknoten an den Serverknoten gegeben werden sollen, und den Umfang, in dem die persönlichen Daten zwecks Vorlage eines Registrierungsantrags freigegeben werden sollen; und
Speichern der Eingaben, die die Datenschutzregelung definieren, in der Benutzerprofil-Stammdatenstruktur (12),
wobei die eindeutige Proxy-Adresse bereitgestellt wird, damit Nachrichten, die unter Verwendung der eindeutigen Proxy-Adresse an den Benutzer adressiert sind, anschließend an den Benutzer weitergeleitet werden.

2. Verfahren nach Anspruch 1, wobei bei jeder nachfolgenden Registrierung bei weiteren Dienste-Computern oder -Serverknoten eine andere Proxy-Adresse für den Benutzer zugewiesen wird.

3. Verfahren nach einem der vorhergehenden Ansprüche, wobei Nachrichten in Abhängigkeit von einer vom Benutzer akzeptierten E-Mail-Filterregelung an den Benutzer weitergeleitet werden.

4. Verfahren nach einem der vorhergehenden Ansprüche, das ferner die Schritte umfasst:
als Reaktion auf eine Anforderung von dem Benutzer an einen Registrierungsagent-Serverknoten (4), der mit dem Kommunikationsnetz (2) verbunden ist, den Benutzer bei dem Serverknoten (3) zu registrieren, Vorlegen eines Registrierungsantrags, um den Benutzer bei dem Serverknoten zu registrieren, indem Registrierungsinformationen von dem Registrierungsagent-Serverknoten entsprechend der Datenschutzregelung gesendet werden, wobei die Registrierungsinformationen aus Daten zusammengestellt werden, die durch Zugreifen auf die persönlichen Daten des Benutzers und durch Zugreifen auf Registrierungsdaten für den Serverknoten, die in dem Registrierungsagent-Serverknoten gespeichert sind, erhalten werden.

5. Verfahren nach Anspruch 4, wobei die gesendeten Informationen durch selektives Zugreifen, entsprechend der Datenschutzregelung, auf die persönlichen Daten des Benutzers zusammengestellt sind.

6. Verfahren nach einem der vorhergehenden Ansprüche, wobei der Server-Knoten (3) eine Website mit einem Server ist, der mit dem Internet oder einem Intranet verbunden ist.

7. Verfahren nach einem der vorhergehenden Ansprüche, wobei der mindestens eine Registrierungsagent-Serverknoten (4) mit dem Internet, einem Intranet oder einem IP-Netz verbunden ist.

8. Verfahren nach einem der vorhergehenden Ansprüche, wobei der mindestens eine Registrierungsagent-Serverknoten (4) eine *World Wide Web*-Site betreibt.

9. Verfahren nach einem der vorhergehenden Ansprüche, ferner mit dem Schritt:
Speichern einer Anzahl von Strukturen persönlicher Registrierungsdaten, wovon jede Registrierungsdaten beschreibt, die der erfolgreichen Registrierung des Benutzers bei einem Serverknoten (3) zugeordnet sind.

10. Vorrichtung zum Datenschutz eines Benutzers, umfassend:
Mittel (13) zum Speichern von Registrierungsdaten;
Mittel (12) zum Speichern von persönlichen Daten;
Mittel (11) zum Empfangen einer Benutzeranforderung, einen Registrierungsantrag im Auftrag des Benutzers einer entfernten Site vorzulegen;
Mittel (11) zum Ausfüllen eines Registrierungsantrags unter Verwendung einer Kombination aus persönlichen Daten, die dem Benutzer zugeordnet sind, und Registrierungsdaten, die der entfernten Site zugeordnet sind;
Mittel (11) zum Senden, im Auftrag des Benutzers, eines ausgefüllten Registrierungsantrags an die entfernte Site; und
mindestens ein computerlesbares Speichermedium, das computerausführbare Anweisungen zum Ausführen des Verfahrens nach einem der Ansprüche 1 bis 9 enthält.

11. Vorrichtung nach Anspruch 10, die ferner mindestens einen Serverknoten (3) und einen Registrierungsagent-Serverknoten (4) umfasst.

12. Vorrichtung nach Anspruch 11, wobei der Serverknoten (3) und der Registrierungsagent-Serverknoten (4) so eingerichtet sind, dass sie eine Website mit einer eindeutigen URL bereitstellen.

13. Vorrichtung nach einem der Ansprüche 10 bis 12, wobei die Vorrichtung ein Computersystem ist,
wobei die Mittel (13) zum Speichern von Registrierungsdaten als ein Speicher ausgeführt sind, der daran angepasst ist, Registrierungsdaten zu speichern, die einem oder mehreren entfernten Computersystemen zugeordnet sind;
die Mittel (12) zum Speichern von persönlichen Daten als ein Speicher ausgeführt sind, der daran angepasst ist, persönliche Daten zu speichern, die einem oder mehreren Benutzern zugeordnet sind; und
die Mittel zum Empfangen einer Benutzeranforderung, die Mittel zum Ausfüllen eines Registrierungsantrags und die Mittel zum Senden eines ausgefüllten Antrags als ein Prozessor (11) ausgeführt sind, der Prozessor so konfiguriert ist, dass er eine Benutzeranforderung akzeptiert, um:
einen Registrierungsantrag im Auftrag des Benutzers einem entfernten Computersystem vorzulegen;
einen Registrierungsantrag unter Verwendung einer Kombination aus persönlichen Daten, die dem Benutzer zugeordnet sind, und Registrierungsdaten, die dem entfernten Computersystem zugeordnet sind, auszufüllen, wobei die persönlichen Daten entsprechend der Datenschutzregelung ausgewählt sind; und
den ausgefüllten Registrierungsantrag im Auftrag des Benutzers der entfernten Site vorzulegen.

## Revendications

1. Procédé de protection de la confidentialité d'un enregistrement d'utilisateur à partir d'un noeud client (1) d'un réseau de télécommunications (2) sur un noeud serveur (3) relié au réseau de télécommunications en utilisant au moins un noeud serveur d'agent d'enregistrement (4) relié au réseau de télécommunications, destiné à mémoriser des données personnelles associées à l'utilisateur ainsi que des données d'enregistrement associées audit noeud serveur, le procédé comprenant les étapes consistant à :
enregistrer lesdites données personnelles sous la forme d'une structure maître de données de profil d'utilisateur (12) ;
produire une adresse de mandataire unique pour l'utilisateur dans une demande d'enregistrement, de sorte que les communications adressées à l'utilisateur en utilisant l'adresse de mandataire unique soient reçues par ledit serveur d'agent d'enregistrement,
le procédé étant **caractérisé par** les étapes consistant à :
accepter des entrées d'utilisateur qui définissent une politique de confidentialité en relation avec des données personnelles d'utilisateur, qui décrivent les politiques que l'utilisateur demande d'appliquer au noeud serveur, si les données personnelles d'utilisateur doivent être données au noeud serveur par le noeud serveur d'agent d'enregistrement, et en fonction du degré selon lequel les données personnelles doivent être diffusées à des fins de soumission d'une demande d'enregistrement ; et
mémoriser lesdites entrées définissant ladite politique de confidentialité dans la structure maître de données de profil d'utilisateur (12),
dans lequel ladite adresse de mandataire unique est produite de sorte que des communications adressées à l'utilisateur en utilisant l'adresse de mandataire unique soient acheminées consécutivement auprès de l'utilisateur.

2. Procédé selon la revendication 1, dans lequel une adresse de mandataire différente pour l'utilisateur est affectée pour chaque enregistrement consécutif avec d'autres ordinateurs de service ou noeuds de serveur.

3. Procédé selon l'une quelconque des revendications précédentes, dans lequel des communications sont acheminées auprès de l'utilisateur en fonction d'une politique de filtrage de courriers électroniques acceptée par l'utilisateur.

4. Procédé selon l'une quelconque des revendications précédentes, le procédé comportant en outre les étapes consistant à :
en réponse à une demande de l'utilisateur auprès d'un noeud serveur d'agent d'enregistrement (4), relié au réseau de communication (2) pour enregistrer l'utilisateur avec le noeud serveur (3), soumettre une demande d'enregistrement pour enregistrer l'utilisateur avec le noeud serveur en transmettant des informations d'enregistrement à partir du noeud serveur d'agent d'enregistrement en fonction de ladite politique de confidentialité, les informations d'enregistrement étant compilées à partir de données obtenues en accédant aux données personnelles de l'utilisateur et en accédant à des données d'enregistrement pour le noeud serveur, stockées sur ledit noeud serveur d'agent d'enregistrement.

5. Procédé selon la revendication 4, dans lequel lesdites informations d'enregistrement transmises sont compilées à partir de données obtenues en accédant sélectivement aux données personnelles de l'utilisateur en fonction de la politique de confidentialité.

6. Procédé selon l'une quelconque des revendications précédentes, dans lequel le noeud serveur (3) est un site web comportant un serveur relié à l'Internet ou à un réseau intranet.

7. Procédé selon l'une quelconque des revendications précédentes, dans lequel ledit noeud serveur d'agent d'enregistrement (4) est relié à l'Internet, à un réseau intranet ou à un réseau IP.

8. Procédé selon l'une quelconque des revendications précédentes, dans lequel ledit noeud serveur d'agent d'enregistrement (4) actionne un site web.

9. Procédé selon l'une quelconque des revendications précédentes, comportant en outre l'étape consistant à :
mémoriser un nombre de structures de données d'enregistrement personnel, dont chacune décrit des données d'enregistrement associées à l'enregistrement réussi de l'utilisateur avec un noeud serveur (3).

10. Dispositif de protection de la confidentialité d'un utilisateur, comportant :
un moyen de mémorisation de données d'enregistrement (13) ;
un moyen de mémorisation de données personnelles (12) ;
un moyen de réception d'une demande d'utilisateur (11) permettant de soumettre, à un site distant, une demande d'enregistrement pour le compte de l'utilisateur ;
un moyen permettant de compléter une demande d'enregistrement (11) en utilisant une combinaison de données personnelles associées à l'utilisateur et de données d'enregistrement associées au site distant ; et
un moyen de transmission d'une demande d'enregistrement complétée au site distant pour le compte de l'utilisateur ; et
au moins un support de stockage lisible par ordinateur contenant des instructions exécutables par ordinateur pour mettre en oeuvre le procédé selon l'une quelconque des revendications 1 à 9.

11. Dispositif selon la revendication 10, comprenant en outre au moins l'un d' un noeud serveur (3) et d' un noeud serveur d'agent d'enregistrement (4).

12. Procédé selon la revendication 11, dans lequel le noeud serveur (3) et le noeud serveur d'agent d'enregistrement (4) sont conçus pour mettre en oeuvre un site web comportant une adresse URL (Universal Resource Locator) unique.

13. Dispositif selon l'une quelconque des revendications 10 à 12, dans lequel le dispositif est un système informatique,
dans lequel le moyen de mémorisation de données d'enregistrement (13) est une mémoire adaptée à mémoriser des données d'enregistrement associées à un ou plusieurs systèmes informatiques distants ;
le moyen de mémorisation de données personnelles (12) est une mémoire adaptée à la mémorisation de données personnelles associées à un ou plusieurs utilisateurs ; et
le moyen de réception d'une demande d'utilisateur, le moyen permettant de compléter une demande d'enregistrement et le moyen de transmission d'une demande complétée est un processeur (11), le processeur étant configuré pour accepter une demande d'utilisateur destinée à :
soumettre, à un système informatique distant, une demande d'enregistrement pour le compte de l'utilisateur;
compléter une demande d'enregistrement en utilisant une combinaison de données personnelles associées à l'utilisateur et de données d'enregistrement associées au système informatique distant ; et
soumettre la demande d'enregistrement complétée au site distant pour le compte de l'utilisateur.
